# NEUE EUROPÄISCHE PATENTSCHRIFT

(11) **EP 0 226 706 B2**
(45) Veröffentlichungstag und Bekanntmachung des Hinweises auf die Entscheidung über den Einspruch: **21.06.1995**
(45) Hinweis auf die Patenterteilung: 15.03.1989
(21) Anmeldenummer: 86111866.9
(22) Anmeldetag: 27.08.1986
(51) Int. Cl.: B62D 65/00, B60R 13/02, B25J 15/06

(54) **Verfahren zum Abdecken von Öffnungen auf einem Hohlkörper durch dünnwandige, flächenhafte Gebilde**
Method of covering openings in a hollow body with a sheet material
Procédé pour recouvrir les ouvertures d'un corps creux à partir d'un matériau en feuille

(30) Priorität: 31.08.1985 DE 3531243
(43) Veröffentlichungstag der Anmeldung: 01.07.1987
(73) Patentinhaber: Bayerische Motoren Werke Aktiengesellschaft, 80788 München (DE)
(72) Erfinder: Milberg, Joachim, Prof.Dr.-Ing., D-8000 München 2 (DE)
(74) Vertreter: Bücken, Helmut

(56) Entgegenhaltungen:
- EP-A- 0 072 277
- DE-A- 2 551 043
- DE-A- 2 556 041
- DE-A- 2 941 209
- DE-B- 1 055 439
- FR-A- 2 284 470
- Zeitschrift Techn. Rundschau 36/85, Seite 118
- VDI-Zeitschrift Bd. 127 (1985) Nr. II-Juni, Blatt IV

## Beschreibung

Die Erfindung bezieht sich auf ein Verfahren zum Abdecken von Öffnungen nach dem Gattungsbegriff des ersten Anspruchs sowie auf eine Vorrichtung zur Durchführung des Verfahrens (siehe z. B. DE-A-2 941 209).

Es ist allgemein bekannt, daß in Kraftfahrzeugtüren auf deren Innenseite verschiedenartige Öffnungen vorgesehen sind, um die in ihr eingebauten Elemente, beispielsweise Fenster sowie deren Führung, Schlösser etc. ein und ausbauen zu können. Nach der Montage der einzelnen Bauteile werden diese Öffnungen durch eine großflächige Folie zugeklebt, indem auf speziellen Kontaktflächen auf dem Türkörper Klebstoff aufgebracht wird. Es ist auch bekannt, selbstklebende Folien zu verwenden. Diese Arbeiten wurden bisher teilweise von Hand durchgeführt, waren also sehr zeitintensiv.

So ist aus der DE 29 41 209 A1 ein Verfahren zum Auftragen einer Klebstoffraupe auf die Abdeckfolie für die Türinnenseite eines Kraftfahrzeugs durch einen Roboter bekannt. Die Folie wird jedoch von Hand an die Türinnenseite geklebt, wozu die Verkleidungsplatte der Türinnenverkleidung mitverwendet werden kann.

Folien im Sinne dieser Erfindung sind auch solche dünnwandigen, flächenhafte Gebilde, die neben einer reinen Abdeckfunktion noch weitere Funktionen, so zum Beispiel Schalldämmung und/oder Stoßabsorption, erfüllen können. Wesentlich ist, daß sie durch Kleben befestigt werden und folienähnlich sind, d. h. biegeschlaffen Charakter haben.

Aufgabe der vorliegenden Erfindung ist es, ein Verfahren und eine Vorrichtung zur Durchführung des Verfahrens bereitzustellen, mit dem diese Folien vollautomatisch geklebt werden können. Diese Aufgabe wird erfindungsgemaß durch die kennzeichnenden Merkmale des ersten Anspruchs gelöst. Der Vorteil der Lösung besteht darin, daß mit einem einzigen Roboter sowohl die Folie von einem Folienstapel genommen als auch mit einem Klebstoffauftrag versehen und sodann zu der zu beklebenden Tür geführt werden kann. Dadurch wird dieser Arbeitsschritt in äußerst kurzer Zeit durchführbar. Das Verfahren eignet sich sowohl für an der Fahrzeugkarosserie montierte Türen als auch für auf separaten Fertigungsstraßen komplettierbare Türen. Zur Aufnahme der Folie und zu deren verwerfungsfreien Halten sowie Anbringen an der Türinnenseite hat sich eine mit geringem Unterdruck arbeitende Saugspannplatte als besonders geeignet herausgestellt. Durch die Anpassung der Kontur der Saugspannplatte an die Kontur der Folie ist es weiterhin möglich, die erfindungsgemäße Vorrichtung auch bei zurückgesetzten Klebeflächen zu verwenden, da Folie und Saugspannplatte gleich groß sind.

Zwar beschreibt die Druckschrift "Assembly Automation", in der über die Arbeitstagung der IPA vom 25. bis 27.05.82 berichtet wird, auf den Seiten 532 bis 543 ein Verfahren zur Montage von Windschutzscheiben an Kraftfahrzeugen. Hierbei werden die Windschutzscheiben mit Hilfe eines einzigen Roboters aufgenommen, einer Klebstoffauftragsstaion zugeführt und anschließend in das Kraftfahrzeug eingesetzt. Es fehlt jedoch jeglicher Hinweis, wie im Unterschied zu formsteifen, selbsttragenden Windschutzscheiben gerade biegeschlaffe Folien aufgenommen, transportiert und gegen eine Fahrzeugtür gepreßt werden können.

Die Weiterbildung nach Anspruch 2 hat den Vorteil, daß der gerätetechnische Aufwand vermindert werden kann, wenn die Klebestation mit einer ortsfest ausgerüsteten Klebstoffauftragsdüse ausgerüstet ist. Da der Roboter sowieso frei programmierbar ist und die Folie von ihrem Lagerplatz zur Tür transportieren muß, ist es günstig, ihn auch die Verfahrbewegung zur Erzielung einer oder mehrerer in sich geschlossener Klebstoffraupen auf die Folie auftragen zu lassen.

Eine zur Durchführung des Verfahrens geeignete Vorrichtung beschreiben die Ansprüche 3 bis 12.

Die Weiterbildung der Erfindung nach Anspruch 3 hat den Vorteil, daß durch den formsteifen Kasten beim Anspressen der Folie keine Verformung auftritt. Würde dies nämlich geschhen, so würde die Klebstoffraupe am Türrand zu schwach und in der Türmitte zu stark angedruckt. Durch das Vorsehen von einer Vielzahl von Öffnungsreichen wird verhindert, daß die Folie in die Öffnung hineingezogen wird, wodurch sie nicht mehr verwerfungsfrei gehalten werden kann.

Durch die Weiterbildung nach Anspruch 4 wird verhindert, daß ― da die Folie durch den Unterdruck sich im Bereich der Öffnungen leicht wölbt ― der Folienrand vom Greifer absteht.

Durch die Anordnung nach den kennzeichnenden Merkmalen der Ansprüche 6 und 7 wird eine möglichst große Saugfläche erzielt, um die Folie festzuhalten, ohne die Planlage zu gefährden.

Durch die Weiterbildung nach Anspruch 8 wird sichergestellt, daß überall dort, wo die Klebstoffraupe vorgesehen ist, auch ein Anpreßdruck ausgeübt werden kann.

Durch den mehrschichtigen Aufbau der Arbeitsfläche, wie er in den Ansprüchen 9 bis 11 beschrieben wird, wird der Vorteil erreicht, daß sowohl Unebenheiten in der Tür ausgeglichen werden können, als auch ein sauberes, randscharfes Anpressen der Klebstoffraupe erzielt werden kann.

Um flexibel in der Fertigung zu sein, ist es sinnvoll, die Saugspannplatte auswechselbar an dem Roboter zu befestigen. Dadurch können auf einer Fertigungsstraße Türen unterschiedlicher Größe alleine durch Auswechseln des Saugspannrahmens bearbeitet werden (Anspruch 12).

Im folgenden wird die Erfindung anhand eines bevorzugten Ausführungsbeispiels näher dargestellt. Es stellen dar :
Fig. 1 die Innenseite einer Kraftfahrzeugtür mit montierter Abdeckfolie ;
Fig. 2 eine perspektivische Darstellung einer Kraftfahrzeugtür, an der gerade die Folie mit Hilfe des Saugspannrahmens angeklebt wird ;
Fig. 3 einen Querschnitt durch die erfindungsgemäß aufgebaute Saugspannplatte.

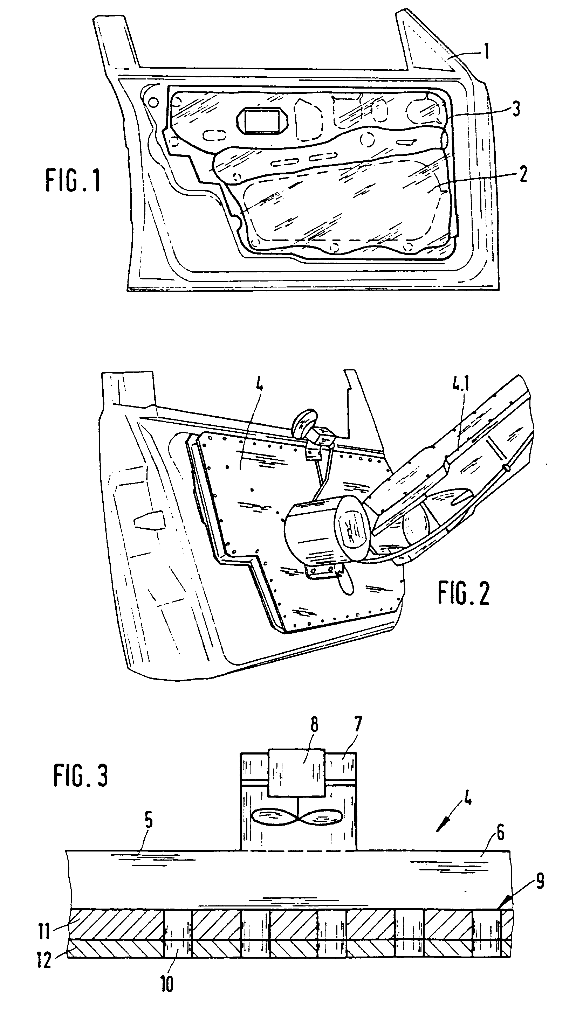

In Fig. 1 ist eine fertig lackierte Kraftfahrzeugtür 1 von deren Innenseite her dargestellt. Die auf der Innenseite liegenden Öffnungen werden in an sich bekannter Weise durch eine Folie 2 überdeckt. Diese Folie wird mit Hilfe einer Klebstoffraupe 3 auf das Innenblech geklebt.

Erfindungsgemäß wird dies mit Hilfe einer Saugspannplatte 4, die an einem Roboterarm 4.1 befestigt ist, bewerkstelligt (siehe Fig. 2). Die Saugspannplatte 4 hat hierbei die Abmessungen der zu klebenden Folie 2. Dies hat den Vorteil, daß die Folie mit Hilfe der Saugspannplatte 4 auch auf zurückversetzte, d. h. tieferliegende Flächen aufgeklebt werden kann.

Fig. 3 zeigt einen Querschnitt durch die erfindungsgemäß aufgebaute Saugspannplatte 4. Die Saugspannplatte 4 besteht aus einem Kasten 5, welcher bevorzugt aus Aluminiumblechen und Profilen hergestellt ist. Aufgabe dieses Kastens 5 ist es, absolut steif gegenüber Verformungen zu sein. Auf der Rückseite 6 des Kastens 5 ist eine Öffnung 7 vorgesehen, in welcher ein Sauglüfter 8 angeordnet ist. Dieser Sauglüfter erzeugt im Kasten 5 einen Unterdruck. Versuche haben ergeben, daß ein Unterdruck von ca. 20-100 mm Wassersäule ausreichend ist. Hierzu ist nur ein leistungsschwacher Sauglüfter erforderlich, so daß kein hoher Energiebedarf besteht. Dies ist vorteilhaft, weil bei aufgenommener Folie keine Kühlluft für den Sauglüfter zur Verfügung steht.

Auf der Vorderseite 9 des Kastens 5 sind eine Vielzahl von Öffnungsreihen 10 vorgesehen, die mit dem Inneren des Kastens 5 in Verbindung stehen. Die Öffnungsreihen 10 sind auf der gesamten Vorderseite 9 der Saugspannplatte 4 verteilt, mit Ausnahme des Bereiches, in dem die Kleberaupe auf der Folie vorgesehen ist. Versuche haben ergeben, daß es ausreichend ist, die Öffnungsquerschnitte im Bereich zwischen 10 und 20 mm, den Öffnungsmittenabstand auf doppelten Öffnungsquerschnitt zu wählen, die einzelnen Reihen versetzt untereinander anzuordnen und den Reihenabstand im Bereich zwischen dem 1,5 bis 2-fachen Öffnungsquerschnitt vorzusehen. In einem Bereich bis zu 20 mm vom Saugspannplattenrand sind keine Öffnungen vorgesehen, damit die Folie nicht von der Saugspannplatte absteht. Die sich daran anschließenden ersten beiden Öffnungsreihen weisen um etwa die Hälfte kleinere Öffnungsquerschnitte auf.

Zum Ausgleich von Unebenheiten im Türinnenblech sowie zum sauberen, randscharfen Anpressen der Klebstoffraupe sind auf der Vorderseite 9 des Kastens 5 zwei unterschiedlich harte Zellgummimatten 11 und 12 aufgebracht. Die Zellgummimatte 11 besteht aus mittelfestem Schaum mit einem spezifischen Gewicht im Bereich vom 0,3 g/cm³. Sie weist eine Stärke im Bereich zwischen 8 und 10 mm auf und gleicht dadurch Unebenheiten in der Tür sowie Positionsungeauigkeiten infolge Parallelitätsfehler zwischen Türinnenseite und Saugspannplatte 4 aus. Die darauf befestigte Zellgummimatte 12, die direkt mit der Folie 2 in Kontakt gelangt, ist gegenüber der Zellgummimatte 11 weich und weist ein spezifisches Gewicht im Bereich von 0,16 g/cm³ auf. Sie dient in erster Linie zum sauberen, randscharfen Anspressen der Klebstoffraupe. Versuche haben ergeben, daß eine Stärke von 2-3 mm für die Zellaummimatte 12 ausreichend ist.

Die gesamte Saugspannplatte 4 ist mit dem Roboterarm 4.1 in geeigneter Weise verbunden. Die Verbindungsstelle sollte jedoch relativ weich sein, um Lagefehler der Tür auszugleichen.

Das Aufbringen der Folie geschieht erfindungsgemäß dadurch, daß der Roboter mit der Saugspannplatte 4 und ausgeschaltetem Gebläse 8 zu einem zugeschnittenen Folienstapel fährt. Sobald die Saugspannplatte 4 mit ihrer Zellgummimatte 12 oberhalb der obersten Folie positioniert ist, wird der Sauglüfter 8 eingeschaltet. Hierdurch wird die oberste Folie angezogen und sicher von der Zellgummimatte 12 gehalten. Sodann verfährt der Roboter mit der Saugspannplatte 4 und der aufgenommenen Folie 2 zu einer ortsfest angeordneten Klebstoffauftragsstation. Diese besteht aus einer ortsfest angeordneten Klebstoffauftragsdüse. Sobald die Folie vor dieser Düse positioniert ist, wird die Düse eingeschaltet und Klebstoff auf die Folie aufgetragen. Dabei bewegt der Roboter die Folie entlang eines vorgegebenen Weges an der Klebstoffaustragsdüse vorbei, so daß die Folie an allen notwendigen Stellen mit Klebstoff versorgt wird.

Nachdem dies geschehen ist, wird die Klebstoffauftragsdüse abgeschaltet und der Roboter verfährt die Saugspannplatte 4, die Folie 2 und der aufgetragenen Klebstoffraupe 3 zur Tür 1. Hier wird nun die Saugspannplatte 4 exakt positioniert. Dies kann mit Hilfe von optischen Überwachungsgeräten oder Tastern überwacht werden. Aufgrund der Zellgummimatten sowie der weichen Aufhängung der Saugspannplatte 4 an dem Roboterarm 5 können kleine Lagefehler der Tür sowie Blechunebenheiten ausgeglichen werden.

Sobald die Saugspannplatte 4 ordnungsgemäß positioniert ist, drückt der Roboter die Saugspannplatte 4 mit Folie und Klebstoffraupe gegen die Türinnenseite. Dadurch gelangt die Klebstoffraupe 3 mit dem Türinnenblech in Kontakt, so daß die Folie haftet. Sodann wird der Sauglüfter 8 ausgeschaltet, so daß die Saugspannplatte 4 ohne Folie wieder von dem Roboter 4.1 fortgefahren werden kann zu dem Folienstapel, um einen neuen Befestigungszyklus beginnen zu können.

## Patentansprüche

1. Verfahren zum Abdecken von Öffnungen auf Türinnenseiten von Kraftfahrzeugtüren durch Ankleben von Folien, wobei die der Kontur der Türinnenseite angepaßte Folie mit Hilfe einer auf die Folie aufgebrachten Klebstoffraupe auf die Türinnenseite geklebt wird,
dadurch gekennzeichnet, daß die Folie (2) von einer an einem Roboterarm (4.1) befestigten Saugspannplatte (4) von einem Folienstapel ergriffen wird, indem zunächst die Saugspannplatte (4) oberhalb der obersten Folie positioniert und anschließend ein Sauglüfter (8) eingeschaltet wird, der an der Saugspannplatte (4) einen Unterdruck erzeugt, daß die Folie (2) anschließend von diesem Roboterarm (4.1) zu einer Klebstoffauftragsstation gefahren wird und dann nach Auftrag der Klebstoffraupe (3) von der Saugspannplatte (4) gegen die Türinnenwand gepreßt wird, wobei die Kontur der Saugspannplatte (4) der Kontur der Folie (2) angepaßt ist.

2. Verfahren nach Anspruch 1,
dadurch gekennzeichnet, daß die Klebstoffauftragsstation aus einer ortsfest angebrachten Klebstoffauftragsdüse besteht, an welcher die Folie zum Auftragen der Klebstoffraupe entlang geführt wird.

3. Vorrichtung zur Durchführung des Verfahrens nach Anspruch 1 oder 2,
dadurch gekennzeichnet, daß die Saugspannplatte (4) aus einem formsteifen Kasten (5) mit nachgiebiger Arbeitsfläche besteht, wobei die Arbeitsfläche eine Vielzahl von mit einer Unterdruckquelle (Sauglüfter 8) in Verbindung stehenden Öffnungsreihen (10) aufweist.

4. Vorrichtung nach Anspruch 3,
dadurch gekennzeichnet, daß im Randbereich der Saugspannplatte (4) keine Öffnungen vorgesehen sind.

5. Vorrichtung nach Anspruch 3 und/oder Anspruch 4,
dadurch gekennzeichnet, daß die am Randbereich anschließenden ersten Öffnungsreihen (10) einen kleineren Durchmesser als die übrigen, weiter innenliegenden Öffnungsreihen aufweisen.

6. Vorrichtung nach Anspruch 3 bis 5,
dadurch gekennzeichnet, daß der Öffnungsabstand in einer Reihe dem doppelten Öffnungsquerschnitt entspricht.

7. Vorrichtung nach Anspruch 3 bis 6,
dadurch gekennzeichnet, daß der Abstand der einzelnen Öffnungsreihen im Bereich von 1,5 - 2fachen des Öffnungsquerschnitts liegt.

8. Vorrichtung nach einem der vorangegangenen Ansprüche 3 bis 7,
dadurch gekennzeichnet, daß die Öffnungen nur im nicht mit den Kleberaupen in Kontakt gelangenden Folienbereich vorgesehen sind.

9. Vorrichtung nach Anspruch 3,
dadurch gekennzeichnet, daß die Arbeitsfläche mehrschichtig aufgebaut ist.

10. Vorrichtung nach Anspruch 9,
dadurch gekennzeichnet, daß die mit der Folie (2) in Kontakt gelangende erste Schicht (12) der Arbeitsfläche aus einer weichen Matte nachgiebigen Materials besteht, die auf einer zweiten Schicht (11) aus einer mittelfesten Matte nachgiebigen Materials aufgebracht ist, die wiederum an dem Kasten (5) befestigt ist.

11. Vorrichtung nach Anspruch 10,
dadurch gekennzeichnet, daß die erste Schicht (12) aus Zellgummi mit einem spezifischen Gewicht im Bereich von 0,16 g/cm³ und die zweite Schicht (11) ebenfalls aus Zellgummi mit einem spezifischen Gewicht im Bereich von 0,3 g/cm³ besteht.

12. Vorrichtung nach einem der vorangegangenen Ansprüche 3 bis 11,
dadurch gekennzeichnet, daß die Saugspannplatte (4) auswechselbar an dem Roboterarm (4.1) befestigt ist.

## Claims

1. A method of covering openings on the insides of motor-vehicle doors by sticking foils on them, the foil being adapted to the contour of the inside of the door and being stuck thereto by means of a bead of adhesive applied to the foil,
characterised in that a suction clamping plate (4) secured to a robot arm (4.1) takes the foil (2) from a stack of foils, the suction clamping plate (4) being positioned above the top foil, after which an extractor fan (8) is switched on and generates a negative pressure on the suction clamping plate (4), after which the robot arm (4.1) moves the foil (2) to an adhesive-applying station and then, after the adhesive bead (3) has been applied, the suction clamping plate (4) presses the foil against the inner surface of the door, the contour of the suction clamping plate (4) being adapted to the contour of the foil (2).

2. A method according to claim 1,
characterised in that the adhesive-applying station comprises an adhesive-applying nozzle disposed in a stationary position and along which the foil is guided in order to apply the adhesive bead.

3. Apparatus for carrying out the method according to claim 1 or 2,
characterised in that the suction clamping plate (4) comprises a rigid box (5) having a flexible working surface, the working surface comprising a number of rows of openings (10) connected to a negative-pressure source (extractor fan 8)

4. Apparatus according to claim 3,
characterised in that the suction clamping plate (4) is not formed with openings in the edge region.

5. Apparatus according to claim 3 and/or claim 4, characterised in that the first row of openings (10) adjacent the edge region has a smaller diameter than the other rows of openings further inward.

6. Apparatus according to claims 3 to 5, characterised in that the spacing between the openings in a row is equal to twice the cross-section of the openings.

7. Apparatus according to claims 3 to 6, characterised in that the spacing between the individual rows of openings is in the range from 1.5 to twice the cross-section of the openings.

8. Apparatus according to any one of the preceding claims 3 to 7,
characterised in that the openings are provided only in the region of foil which does not come into contact with the adhesive beads.

9. Apparatus according to claim 3,
characterised in that the working surface is made multi-layered.

10. Apparatus according to claim 9,
characterised in that the first layer (12) of the working surface coming into contact with the foil (2) comprises a soft mat of resilient material disposed in or on a second layer (11) of a moderately rigid mat of resilient material, which in turn is secured to the box (5).

11. Apparatus according to claim 10,
characterised in that the first layer (12) is made of foam rubber having a specific weight in the region of 0.16 g/cm³ and the second layer (11) is likewise made of foam rubber having a specific weight in the region of 0.3 g/cm³.

12. Apparatus according to any of the preceding claims 3 to 11,
characterised in that the suction clamping plate (4) is interchangeably secured to the robot arm (4.1).

## Revendications

1. Procédé pour recouvrir les ouvertures des faces intérieures d'une porte de véhicule automobile, en collant des feuilles, selon lequel la feuille adaptée au contour de la face intérieure de la porte est collée sur la face intérieure de la porte à l'aide d'un cordon de colle appliqué sur la feuille, caractérisé en ce que la feuille (2) est prise par une plaque de serrage aspirante (4) fixée à un bras robotisé (4) à partir d'un empilement de feuilles, la plaque de serrage aspirante (4) étant tout d'abord positionnée au-dessus de la première feuille puis un aspirateur (8) est mis en route pour créer une dépression au niveau de la plaque de serrage aspirante (4), puis la feuille (2) est conduite par ce bras robotisé (4.1) à un poste d'application de colle, puis après application du cordon de colle (3) la feuille est pressée par la plaque de serrage (4) aspirante contre la paroi intérieure de la porte, le contour de la plaque de serrage aspirante (4) étant adapté au contour de la feuille (2).

2. Procédé selon la revendication 1, caractérisé en ce que le poste d'application de colle se compose d'une buse d'application de colle montée fixe, le long de laquelle est guidée la feuille sur laquelle on applique le cordon de colle.

3. Dispositif pour l'exécution du procédé selon la revendication 1 ou 2, caractérisé en ce que la plaque de serrage à aspiration (4) se compose d'un caisson (5) de forme rigide avec une surface de travail déformable, la surface de travail présentant une pluralité de rangées d'orifices (10) reliés à une source de dépression (aspirateur 8).

4. Dispositif selon la revendication 3, caractérisé en ce qu'aucun orifice n'est prévu dans la zone de bordure de la plaque de serrage à aspiration.

5. Dispositif selon les revendications 3 à 4, caractérisé en ce que les premières rangées d'orifices (10) contiguës à la zone de bordure présentent un diamètre plus petit que les autres orifices situés plus à l'intérieur.

6. Dispositif selon les revendications 3 à 5, caractérisé en ce que l'intervalle entre orifices dans une rangée correspond au double de la section d'orifice.

7. Dispositif selon les revendications 3 à 6, caractérisé en ce que l'intervalle des rangées d'orifices individuelles est situé dans une plage allant de 1,5 à 2 fois la section d'orifice.

8. Dispositif selon l'une des revendications précédentes 3 à 7, caractérisé en ce que les orifices ne sont prévus que dans les zones de feuilles ne venant pas au contact des cordons de colle.

9. Dispositif selon la revendication 3, caractérisé en ce que la surface de travail est construite à plusieurs couches.

10. Dispositif selon la revendication 9, caractérisé en ce que la première couche (12) de la surface de travail venant en contact avec la feuille (2) se compose d'un matériau déformable, mou, natté, qui est appliqué sur une deuxième couche (11) en matériau déformable, natté, de rigidité moyenne, qui est à nouveau fixée sur le caisson (5).

11. Dispositif selon la revendication 10, caractérisé en ce que la première couche (12) se compose de caoutchouc cellulaire d'un poids spécifique de l'ordre de 0,16 g/cm³ et la deuxième couche (11) se compose également de caoutchouc cellulaire d'un poids spécifique de l'ordre de 0,3 g/cm³.

12. Dispositif selon l'une des revendications 3 à 11, caractérisé en ce que la plaque de serrage à aspiration (4) est fixée de manière interchangeable sur le bras robotisé (4.1).
